(19) Europäisches Patentamt
European Patent Office
Office européen des brevets

(11) **EP 0 961 106 A1**

(12) **EUROPÄISCHE PATENTANMELDUNG**

(43) Veröffentlichungstag:
01.12.1999 Patentblatt 1999/48

(51) Int. Cl.⁶: **G01F 23/296**, G01F 23/284, G01F 25/00

(21) Anmeldenummer: 99117849.2

(22) Anmeldetag: 14.02.1995

(84) Benannte Vertragsstaaten:
AT BE CH DE DK ES FR GB GR IE IT LI LU MC NL PT SE

(30) Priorität: 18.02.1994 DE 4405238

(62) Dokumentnummer(n) der früheren Anmeldung(en) nach Art. 76 EPÜ:
95102003.1 / 0 668 488

(71) Anmelder:
Endress + Hauser GmbH + Co.
79689 Maulburg (DE)

(72) Erfinder:
• Otto, Johanngeorg, Dr.
  73434 Aalen-Hofherrnweiler (DE)
• Lubcke, Wolfgang
  79585 Steinen (DE)

(74) Vertreter: Andres, Angelika
PatServ-Zentrale Patentabteilung,
Endress + Hauser (Deutschland) Holding GmbH,
Postfach 2222
79574 Weil/Rhein (DE)

Bemerkungen:
This application was filed on 10 - 09 - 1999 as a divisional application to the application mentioned under INID code 62.

(54) **Füllstandsmessgerät zur Messung des Füllstands eines Füllguts in einem Behälter**

(57) Die kontinuierliche Messung des Füllstands in einem Behälter erfolgt mit einem nach dem Laufzeitverfahren arbeitenden Füllstandsmeßgerät (1) mittels Wellen, die von einer oberhalb des höchsten vorkommenden Füllstands liegenden Stelle auf die Oberfläche (19) des Füllguts (12) gerichtet werden. Eine Meßschaltung (24) ermittelt den Füllstand aus der Laufzeit des an der Füllgutoberfläche (19) reflektierten Nutzechos. Die Meßschaltung (24) ist über eine Zweidrahtleitung (28) mit einer entfernten Auswertestelle verbunden. Über die Zweidrahtleitung (28) liefert die Meßschaltung (24) das den Füllstand anzeigende elektrische Meßsignal und über die gleiche Zweidrahtleitung (28) erfolgt die Versorgung des Füllstandsmeßgeräts (20) mit elektrischer Energie von der Auswertestelle her.

Fig.1

**Beschreibung**

Die Erfindung betrifft ein Füllstandsmeßgerät zur Messung des Füllstands eines Füllguts in einem Behälter.

Bei der Füllstandsmessung unterscheidet man kontinuierlich messende Füllstandsmeßgeräte, die jederzeit einen Meßwert des aktuellen Füllstands im Behälter liefern können, und Grenzwertgeber, die lediglich anzeigen, ob der Füllstand im Behälter über oder unter einer von dem Grenzwertgeber zu überwachenden vorbestimmten Höhe liegt. Solche Grenzwertgeber werden insbesondere dazu verwendet, einen maximalen oder minimalen Füllstand zu überwachen, um ein Über- oder Unterfüllen des Behälters zu vermeiden. Es sind verschiedene Arten von Grenzwertgebern bekannt, beispielsweise kapazitive oder resistive Grenzwertgeber, die auf elektrische Eigenschaften des Füllguts ansprechen, Grenzwertgeber mit schwingenden Elementen, wie Membranen oder Schwingstäben, deren Schwingungen durch das Füllgut gedämpft werden oder deren Eigenresonanzfrequenz durch das Füllgut verändert wird, usw. Die Wahl des verwendeten Grenzwertgebers hängt von den Eigenschaften des Füllguts und von den Anwendungsbedingungen ab. In jedem Fall gibt ein Grenzwertgeber ein elektrisches Signal ab, das einen ersten Signalwert hat, wenn der Füllstand unter der zu überwachenden Höhe liegt, und das einen davon verschiedenen zweiten Signalwert hat, wenn der Füllstand über der zu überwachenden Höhe liegt. Das Signal ändert seinen Signalwert genau dann, wenn bei Zuführung oder Entnahme von Füllgut der Füllstand durch die zu überwachende Höhe geht. Bei mehreren Arten von Grenzwertgebern hängt der Signalwert davon ab, ob der Grenzwertgeber mit dem Füllgut in Berührung steht oder nicht; bei solchen Grenzwertgebern entspricht die vorbestimmte Höhe des Füllstands, die der Grenzwertgeber überwacht, der Einbauhöhe des Grenzwertgebers.

In der DE 39 04 824 A1 ist eine Füllstandsmeßanordnung beschrieben, die einerseits ein mechanisches Füllstandsmeßgerät, z.B. mit schwimmerbetätigtem Übertragungsgestänge, zur kontinuierlichen Messung des Füllstands in einem Behälter und andererseits einen elektrischen Grenzwertgeber zur Begrenzung des maximal zulässigen Füllstands aufweist. Wenn der Füllstand die maximal zulässige Höhe erreicht, gibt der Grenzwertgeber ein elektrisches Signal ab, das unabhängig von dem vom mechanischen Füllstandsmeßgerät angezeigten Füllstand eine elektronisch gesteuerte automatische Füllstandsbegrenzung auslöst, also beispielsweise eine Befüllung des Behälters unterbricht. Auf diese Weise wird eine Überfüllung des Behälters auch im Fall eines Defekts oder einer Ungenauigkeit des mechanischen Füllstandsmeßgeräts verhindert.

Andererseits sind kontinuierlich messende Füllstandsmeßgeräte bekannt, die nach dem Laufzeitverfahren arbeitende Abstandsmeßgeräte sind. So ist in der DE 43 07 635 A1 eine Vorrichtung zur kontinuierlichen Messung des Füllstands einer Flüssigkeit in einem Behälter beschrieben, die ein Rohr aufweist, das sich vom Boden des Behälters nach oben erstreckt und mit Flüssigkeit gefüllt ist, wobei der Füllstand innerhalb des Rohres mit dem Füllstand außerhalb des Rohres identisch ist. Entlang der Länge des Rohres sind eine Vielzahl von Reflektoren angebracht. Am unteren Ende des Rohres ist eine Sende-Empfangs-Einrichtung angebracht, die Ultraschallwellen nach oben durch die im Rohr befindliche Flüssigkeit abstrahlt und die an den Reflektoren und an der Flüssigkeitsoberfläche reflektierten Ultraschallwellen empfängt. Eine Meßschaltung berechnet die Höhe der Flüssigkeit aus dem Verhältnis der Differenz zwischen den Ankunftszeiten der von den beiden obersten eingetauchten Reflektoren reflektierten Ultraschallimpulse und der Differenz zwischen den Ankunftszeiten der von der Flüssigkeitsoberfläche und dem obersten eingetauchten Reflektor reflektierten Ultraschallimpulse. Auf diese Weise ist die Messung unabhängig von Änderungen der akustischen Eigenschaften innerhalb der Flüssigkeit, insbesondere von material- oder temperaturbedingten Änderungen der Schallgeschwindigkeit. Die Verwendung eines Rohres ergibt einerseits eine Bündelung der Schallwellen auf einen kleinen Bereich der Flüssigkeitsoberfläche und verhindert andererseits den Einfluß von Störreflexionen und von äußeren Störquellen.

In sehr ähnlicher Weise ist eine in der DE 41 26 063 A1 beschriebene Füllstandsmeßvorrichtung ausgebildet, jedoch mit dem Unterschied, daß zwei parallele Rohre vorgesehen sind, von denen das eine Rohr die Reflektoren enthält, während das andere Rohr für die Laufzeitmessung zur Flüssigkeitsoberfläche verwendet wird; jedes der beiden Rohre ist mit einer eigenen Sende-Empfangs-Einrichtung für Ultraschallwellen versehen.

Diese bekannte Technik setzt voraus, daß in dem Behälter ein Rohr angebracht ist, das sich im wesentlichen über die ganze Höhe des Behälters erstreckt. Dies ist bei kleinen Behältern, wie Treibstofftanks in Fahrzeugen oder Flugzeugen, problemlos möglich, erweist sich aber bei großen Behältern oft als schwierig oder unmöglich. Die bekannte Technik setzt ferner voraus, daß die Sende-Empfangs-Einrichtungen für die zur Laufzeitmessung verwendeten Wellen am unteren Ende des Rohres angebracht und somit der Flüssigkeit im Behälter ausgesetzt sind, was beispielsweise bei aggressiven oder sehr heißen Füllgütern nicht möglich ist. Schließlich setzt die bekannte Technik voraus, daß die Wellen durch die Flüssigkeit übertragen werden, was in vielen Fällen nur bei Anwendung von Ultraschallwellen möglich ist, nicht jedoch bei Anwendung von sehr kurzen elektromagnetischen Wellen (Mikrowellen), wie sie in zunehmendem Maße zur Füllstandsmessung nach dem Laufzeitverfahren verwendet werden.

Die Schwierigkeiten, die bei der zuvor geschilderten bekannten Technik auftreten, werden bei einem beispielsweise in der DE 38 12 293 C2 beschriebenen Füllstandsmeßgerät vermieden, das gleichfalls nach dem Laufzeitverfahren arbeitet, wobei aber die Wellen von einer oberhalb des höchsten vorkommenden Füllstands liegenden Stelle nach unten auf die Oberfläche des Füllguts gerichtet werden. In diesem Fall gehen sowohl die gesendeten Wellen als auch die reflektierten Echowellen nicht durch das Füllgut, sondern durch die über dem Füllgut befindliche Luft, und die Sende-Empfangs-Einrichtung steht nicht in direktem Kontakt mit dem Füllgut. Die zur Laufzeitmessung verwendeten Wellen können Mikrowellen oder Ultraschallwellen sein. In beiden Fällen ergibt sich der Abstand zwischen dem Füllstandsmeßgerät und der Füllgutoberfläche aus der Laufzeit der Wellen, die dem an der Füllgutoberfläche reflektierten Nutzecho entsprechen. Aus diesem Abstand läßt sich unmittelbar der Füllstand berechnen.

Voraussetzung für eine richtige Füllstandsmessung ist bei diesem Verfahren, daß das Nutzecho aus der Gesamtheit der empfangenen Echowellen eindeutig identifiziert wird. Zu diesem Zweck ist es üblich, aus den empfangenen Echowellen eine die Amplituden als Funktion der Entfernung darstellende Echofunktion zu bilden. Unter idealen Bedingungen weist diese Echofunktion ein absolutes Maximum auf, dessen Position das Nutzecho und damit den gesuchten Abstand zwischen dem Füllstandsmeßgerät und der Füllgutoberfläche repräsentiert. In der Praxis treten jedoch Störungen auf, die die Auswertung der Echofunktion erschweren oder sogar unmöglich machen. So ist zunächst der Rauschuntergrund im Nahbereich deutlich erhöht. Bei Ultraschallgeräten beruht dies auf dem Ausschwingen des elektroakustischen Wandlers, bei Mikrowellengeräten auf Mehrfachreflexionen im Bereich der Signaleinspeisung und der Antenne. Ferner werden Echos nicht nur an der Füllgutoberfläche erzeugt, sondern auch an anderen reflektierenden Gebilden im Strahlengang. Gerade bei der Füllstandsmessung in Behältern treten daher infolge von Reflexionen an Behälterwänden, Schweißnähten und Einbauten wie Rohren, Heizelementen, Grenzwertgebern usw. signifikante Störechos in der Echofunktion auf, von denen das Nutzecho unterschieden werden muß. Insbesondere kann man nicht davon ausgehen, daß das Nutzecho mit dem absoluten Maximum der Echofunktion identisch ist.

Der Erfindung liegt die Aufgabe zugrunde, bei einer Anordnung, die für eine kontinuierliche Messung des Füllstands in einem Behälter nach dem Laufzeitverfahren unabhängig von der Größe des Behälters und der Art und den Eigenschaften des Füllguts geeignet ist, eine automatische Kontrolle des Meßergebnisses und gegebenenfalls die Behebung eines Meßfehlers zu ermöglichen.

Die Aufgabe wird dadurch gelöst, daß das Füllstandsmeßgerät einen Füllstandssensor aufweist, der von einer oberhalb des höchsten vorkommenden Füllstands liegenden Stelle aus Wellen auf die Oberfläche des Füllguts richtet, der die an der Füllgutoberfläche reflektierten Echowellen empfängt und der ein die Echowellen darstellendes elektrisches Ausgangssignal liefert, und das eine Meßschaltung aufweist, die aus dem Ausgangssignal des Füllstandsensors das an der Füllgutoberfläche reflektierte Nutzecho ermittelt und den Meßwert des Füllstands aus der Laufzeit des Nutzechos bestimmt, wobei die Meßschaltung über eine Zweidrahtleitung mit einer entfernten Auswertestelle verbunden ist, wobei die Meßschaltung über die Zweidrahtleitung das den Füllstand anzeigende elektrische Meßsignal liefert und wobei die Versorgung des Füllstandsmeßgeräts mit elektrischer Energie über die gleiche Zweidrahtleitung von der Auswertestelle her erfolgt.

Gemäß bevorzugter Weiterbildungen des erfindungsgemäßen Füllstandsmeßgeräts handelt es sich bei dem Meßsignal um ein zwischen 4 und 20 mA veränderliches Stromsignal; bei den Wellen handelt es sich entweder um kurze elektromagnetische Wellen (Mikrowellen) oder um Ultraschallwellen.

Gemäß einer vorteilhaften Weiterbildung des erfindungsgemäßen Füllstandsmeßgeräts ist an dem Behälter wenigstens ein Grenzwertgeber angeordnet, der ein elektrisches Signal liefert, das anzeigt, ob der Füllstand im Behälter größer oder kleiner als ein von dem Grenzwertgeber zu überwachender Füllstand ist, der zwischen dem minimalen und dem maximalen Füllstand des Behälters liegt; die Meßschaltung empfängt das Ausgangssignal des bzw. jedes Grenzwertgebers und verwendet es zur Kontrolle des vom Füllstandsmeßgerät ermittelten Füllstands-Meßwerts.

Mit der Anordnung nach der Erfindung kann auf Grund der Füllstandsanzeigen eines oder mehrerer Grenzwertgeber eine laufende Plausibilitätskontrolle des Meßergebnisses der kontinuierlichen Füllstandsmessung vorgenommen werden, die umso genauer ist, je größer die Anzahl der verwendeten Grenzwertgeber ist. Darüber hinaus liefert jeder Grenzwertgeber bei Änderungen des Füllstands im Behälter jedesmal dann einen exakten Füllstands-Meßwert, wenn der Füllstand gerade gleich der von dem Grenzwertgeber zu überwachenden Höhe ist. Durch Vergleich dieses Meßwerts mit dem gleichzeitig von dem Füllstandsmeßgerät gelieferten Meßwert kann festgestellt werden, ob ein Meßfehler vorliegt, und bei Überschreiten einer vorgegebenen Fehlergrenze können Maßnahmen zur Behebung des Meßfehlers eingeleitet werden, oder es kann eine Warnung oder Störungsmeldung ausgegeben werden. Dadurch kann der Einsatzbereich von kontinuierlich messenden Füllstandsmeßgeräten erweitert und die Meßsicherheit unter schwierigen Anwendungsbedingungen vergrößert werden.

Eine erste Ausführungsform der Erfindung besteht darin, daß am Behälter mehrere Grenzwertgeber zur Überwachung unterschiedlicher Höhen des Füllstands angeordnet sind und die Meßschaltung bei jeder Zustandsänderung des Ausgangssignals eines Grenzwertgebers, die auftritt, wenn der Füllstand die von diesem Grenzwertgeber zu überwachende Höhe erreicht, den gleichzeitig vom Füllstandsmeßgerät gelieferten Füllstands-Meßwert mit dieser Höhe vergleicht, um die Richtigkeit der vom Füllstandsmeßgerät durchgeführten Messung zu kontrollieren.

Wenn die Meßschaltung aus dem Ausgangssignal des Füllstandssensors eine Echofunktion bildet, die die Echoamplituden als Funktion der Entfernung über den gesamten Meßbereich darstellt, und jede aktuelle Echofunktion mit einer bei leerem Behälter aufgenommenen, gespeicherten Leerechofunktion vergleicht, um das Nutzecho zu ermitteln, das den an der Füllgutoberfläche reflektierten Echowellen entspricht, ist die Anordnung in diesem Fall vorzugsweise so ausgebildet, daß die Meßschaltung jedesmal dann, wenn der Höhenvergleich einen über einer vorgegebenen Fehlergrenze liegenden Meßfehler ergibt, die Leerechofunktion von oben bis zu der Höhe aktualisiert, die von dem Grenzwertgeber zu überwachen ist, dessen Ausgangssignal seinen Zustand geändert hat.

Es kann bei dieser ersten Ausführungsform auch vorgesehen sein, daß die Meßschaltung die gespeicherte Leerechofunktion unabhängig von dem Ergebnis des Höhenvergleichs jedesmal dann, wenn das Ausgangssignal eines Grenzwertgebers seinen Zustand ändert, von oben bis zu der von diesem Grenzwertgeber zu überwachenden Höhe aktualisiert.

Eine weitere Ausgestaltung dieser ersten Ausführungsform besteht darin daß die Meßschaltung die gespeicherte Leerechofunktion in vorbestimmten Zeitintervallen im Bereich der Grenzwertgeber, deren Ausgangssignale anzeigen, daß der Füllstand unter den von ihnen zu überwachenden Höhen liegt, aktualisiert.

Ferner kann vorgesehen werden, daß die Meßschaltung zur Ermittlung des Nutzechos nur den Teil der aktuellen Echofunktion auswertet, der in dem Bereich zwischen den von zwei Grenzwertgebern zu überwachenden Höhen liegt, von denen der eine Grenzwertgeber anzeigt, daß der Füllstand über der von ihm zu überwachenden Höhe liegt, und der andere Grenzwertgeber anzeigt, daß der Füllstand unter der von ihm zu überwachenden Höhe liegt.

Schließlich besteht eine vorteilhafte Ausgestaltung dieser ersten Ausführungsform darin, daß die Meßschaltung prüft, ob der vom Füllstandsmeßgerät gelieferte Füllstands-Meßwert in dem Bereich zwischen den von zwei Grenzwertgebern zu überwachenden Höhen liegt, von denen der eine Grenzwertgeber ein Signal abgibt, das anzeigt, daß der Füllstand über der von ihm zu überwachenden Höhe liegt, und der andere Grenzwertgeber ein Signal abgibt, das anzeigt, daß der Füllstand unter der von ihm zu überwachenden Höhe liegt.

Eine zweite Ausführungsform der Erfindung besteht darin, daß am Behälter ein Grenzwertgeber angeordnet ist und die Meßschaltung bei jeder Zustandsänderung des Ausgangssignals des Grenzwertgebers, die auftritt, wenn der Füllstand die von dem Grenzwertgeber zu überwachende Höhe erreicht, den gleichzeitig vom Füllstandsmeßgerät gelieferten Füllstands-Meßwert mit dieser Höhe vergleicht, um die Richtigkeit der vom Füllstandsmeßgerät durchgeführten Messung zu kontrollieren.

Wenn die Meßschaltung aus dem Ausgangssignal des Füllstandssensors eine Echofunktion bildet, die die Echoamplituden als Funktion der Entfernung über den gesamten Meßbereich darstellt, und jede aktuelle Echofunktion mit einer bei leerem Behälter aufgenommenen, gespeicherten Leerechofunktion vergleicht, um das Nutzecho zu ermitteln, das den an der Füllgutoberfläche reflektierten Echowellen entspricht, ist die Anordnung in diesem Fall vorzugsweise so ausgebildet, daß die Meßschaltung jedesmal dann, wenn der Höhenvergleich einen über einer vorgegebenen Fehlergrenze liegenden Meßfehler ergibt, die Leerechofunktion von oben bis zu der Höhe aktualisiert, die von dem Grenzwertgeber zu überwachen ist.

Es kann bei dieser zweiten Ausführungsform auch vorgesehen sein, daß die Meßschaltung die gespeicherte Leerechofunktion unabhängig von dem Ergebnis des Höhenvergleichs jedesmal dann, wenn das Ausgangssignal des Grenzwertgebers seinen Zustand ändert, von oben bis zu der von dem Grenzwertgeber zu überwachenden Höhe aktualisiert.

Weitere Merkmale und Vorteile der Erfindung ergeben sich aus der folgenden Beschreibung von Ausführungsbeispielen an Hand der Zeichnungen. In den Zeichnungen zeigen:

Fig. 1 eine schematische Darstellung einer Anordnung zur Messung des Füllstands in einem Behälter gemäß der Erfindung,

Fig. 2, 3 und 4 Diagramme zur Erläuterung der Funktionsweise des in der Anordnung von Fig. 1 verwendeten Füllstandsmeßgeräts und

Fig. 5 eine abgeänderte Ausführungsform der Anordnung von Fig. 1.

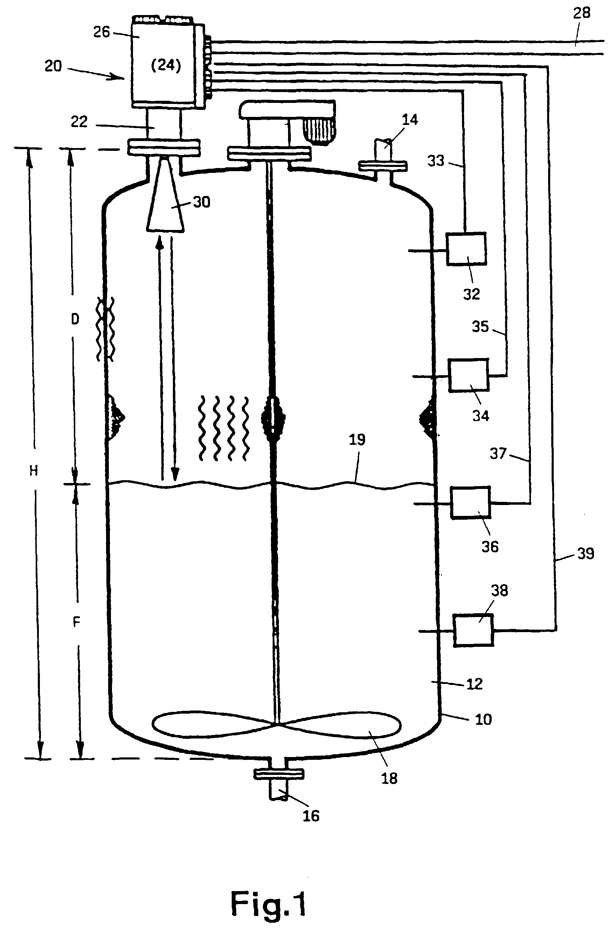

Fig. 1 der Zeichnung zeigt einen Behälter 10, der teilweise mit einem Füllgut 12 gefüllt ist. Der Behälter ist mit einem Zulauf 14 zum Einbringen von Füllgut in den Behälter und mit einem Ablauf 16 zur Entnahme von Füllgut aus dem Behälter versehen. Der Behälter kann mit weiteren, dem Fachmann bekannten Einrichtungen ausgestattet sein, die von der Art des Füllguts abhängen, beispielsweise mit einem motorisch angetriebenen Rührwerk 18. Der Füllstand F ist die Höhe der Füllgutoberfläche 19 über dem tiefsten Punkt des Behälters. Dieser Füllstand ändert sich bei Zuführung von Füllgut in den Behälter und bei Entnahme von Füllgut aus dem Behälter.

Zur kontinuierlichen Messung des Füllstands im Behälter 10 ist am Behälter oberhalb des höchsten vorkommenden Füllstands ein Füllstandsmeßgerät 20 angebracht, das nach dem Laufzeit verfahren arbeitet. Das Füllstandsmeßgerät 20 enthält einen Füllstandssensor 22, der Wellen zur Füllgutoberfläche 19 hin aussendet und die an der Füllgutoberfläche 19 reflektierten Echowellen empfängt, und eine elektronische Meßschaltung 24, die in einem an der Oberseite des Behälters montierten Gehäuse 26 untergebracht ist und elektrische Signale vom Füllstandssensor 22 empfängt. Die Meßschaltung 24 mißt die Laufzeit der Wellen vom Füllstandssensor 22 zur Füllgutoberfläche 19 und zurück zum Füllstandssensor. Da die Ausbreitungsgeschwindigkeit der Wellen bekannt ist, ergibt sich aus der Laufzeit der Abstand D der Füllgutoberfläche vom Füllstandssensor 22 und daraus schließlich der Füllstand F als Differenz zwischen der bekannten Einbauhöhe H des Füllstandssensors 22 und dem gemessenen Abstand D:

$$F = H - D$$

Die Meßschaltung 24 ist über eine Zweidrahtleitung 28 mit einer entfernten Auswertestelle verbunden; sie liefert über die Zweidrahtleitung 28 ein den Füllstand anzeigendes elektrisches Meßsignal, das nach einer bekannten Norm beispielsweise ein zwischen 4 und 20 mA veränderliches Stromsignal sein kann. In der Auswertestelle kann das Meßsignal zur Anzeige des Füllstands verwendet werden, sowie zur Auslösung von Schaltvorgängen, die beispielsweise das Füllen und Entleeren des Behälters 10 regeln. Über die gleiche Zweidrahtleitung kann nach einer bekannten Technik die Versorgung des Füllstandsmeßgeräts 20 mit elektrischer Energie von der Auswertestelle her erfolgen.

Dieses Laufzeitverfahren und die zu seiner Durchführung verwendeten Füllstandssensoren und Auswerteschaltungen sind allgemein bekannt; sie brauchen daher nicht im einzelnen beschrieben zu werden. Das Laufzeitverfahren weist den Vorteil auf, daß der Füllstandssensor 22 mit dem Füllgut 12 nicht in direkten Kontakt kommen muß. Die Wetten können sehr kurze elektromagnetische Wellen (Mikrowellen) oder Ultraschallwellen sein. In den meisten Fällen werden die Wellen in Form kurzer Impulse ausgesendet, so daß auch die empfangenen Echowellen die Form kurzer Impulse haben; es sind jedoch auch Laufzeitverfahren bekannt, die nach dem Dauerstrichverfahren mit kontinuierlich ausgesendeten Wellen arbeiten.

Der Aufbau des Füllstandssensors 22 hängt natürlich von der Art der verwendeten Wellen ab. Bei dem dargestellten Ausführungsbeispiel weist der Füllstandssensor 22 einen Hornstrahler 30 auf, was erkennen läßt, daß er zur Aussendung und zum Empfang sehr kurzer elektromagnetischer Wellen ausgebildet ist. Dementsprechend enthält der Füllstandssensor 22 einen Sendegenerator, der elektrische Schwingungen mit der Frequenz der Sendewellen erzeugt, die dem Hornstrahler 30 zugeführt werden, sowie eine Empfangsschaltung, die die empfangenen Echowellen mit der gleichen Frequenz verstärkt. Ein zur Aussendung und zum Empfang von Ultraschallwellen bestimmter Füllstandssensor würde einen elektroakustischen Wandler zur Umwandlung des elektrischen Sendesignals in Ultraschallwellen und zur Ausstrahlung dieser Ultraschallwellen aufweisen und den gleichen oder einen gleichartigen Wandler zur Umwandlung der empfangenen Ultraschall-Echowellen in ein elektrisches Empfangssignal verwenden. Da die erwähnten Bestandteile solcher Füllstandssensoren dem Fachmann allgemein bekannt sind, sind sie in der Zeichnung nicht dargestellt, und sie brauchen nicht näher beschrieben zu werden.

Zur Ermittlung der Laufzeit der Wellen wird gewöhnlich in der Meßschaltung 24 aus den empfangenen Echowellen eine die Echo-amplituden als Funktion der Entfernung darstellende Echofunktion gebildet. Unter idealen Bedingungen weist diese Echofunktion ein eindeutiges absolutes Maximum auf, dessen Position den gesuchten Abstand D zwischen dem Füllstandsmeßgerät und der Füllgutoberfläche repräsentiert.

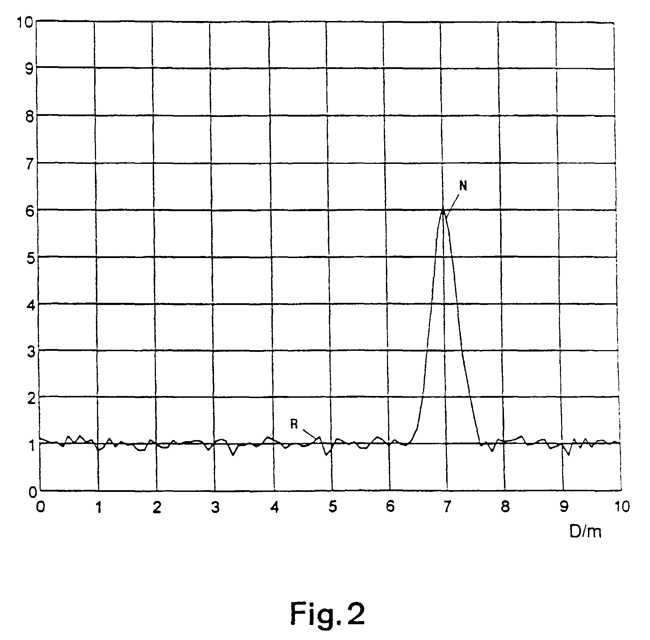

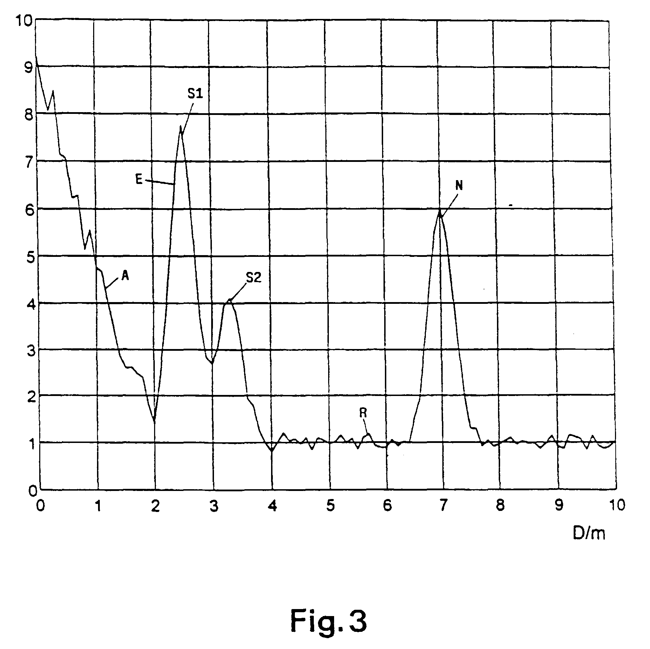

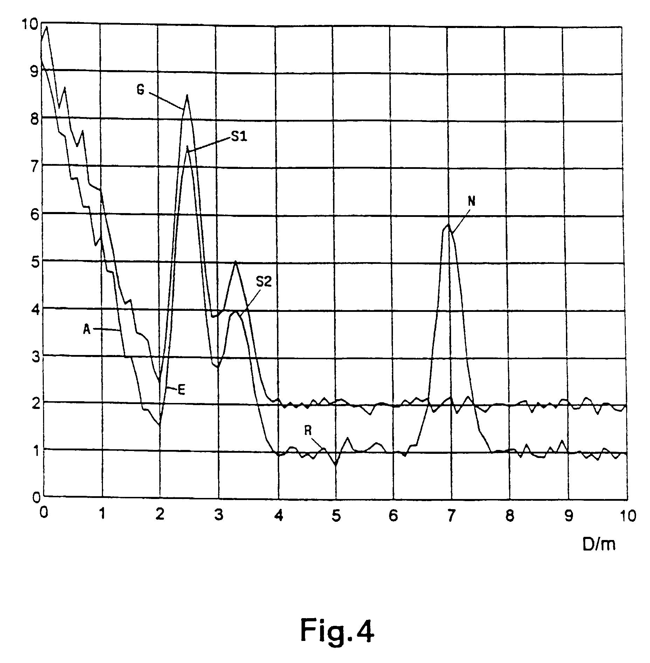

In Fig. 2 ist eine derartige ideale Echofunktion dargestellt, bei der sich nur ein signifikanter Peak N über einen vorhandenen Rauschpegel R erhebt und eindeutig als Nutzpeak identifiziert werden kann. In dieser Figur, sowie auch in den Figuren 3 und 4, sind auf der Abszisse der Abstand D in Metern (m) und auf der Ordinate die Signalamplitude in willkürlichen Einheiten aufgetragen.

Unter realen Bedingungen treten allerdings Störungen auf, die die Auswertung der Echofunktion erschweren oder sogar unmöglich machen. Hierzu gehören die folgenden Effekte:

- Der Rauschuntergrund ist nicht konstant, sondern im Nahbereich deutlich erhöht. Bei Ultraschallsensoren beruht dies auf dem Ausschwingen des elektroakustischen Wandlers nach dem Ende des Sendeimpulses, bei Mikrowellensensoren auf Mehrfachreflexionen im Bereich der Signaleinspeisung und der Antenne.

- Jedes reflektierende Gebilde im Strahlengang, der sich auf Grund einer endlichen Richtcharakteristik keulenförmig mit Öffnungswinkeln in der Größenordnung von 10 bis 30 Grad aufweitet, erzeugt ein Echo. Gerade bei der Füllstandsmessung in Behältern treten also durch die Behälterwände, Schweißnähte und Einbauten wie Rohre, Heizelemente, Grenzwertgeber usw. zusätzliche signifikante Peaks in der Echofunktion auf, von denen der Nutzpeak unterschieden werden muß. Insbesondere kann man nicht davon ausgehen, daß das absolute Maximum der Echofunktion mit Sicherheit der Nutzpeak ist.

In Fig. 3 ist eine derartige reale Echofunktion E dargestellt. Im Bereich von 0 bis 2 m erstreckt sich hier eine abfallende Rampe A; bei 2,5 m und bei 3,3 m befinden sich Störechos S1, S2, die durch Einbauten hervorgerufen werden.

Das Nutzecho N bei 7 m ist sowohl kleiner als das Störecho S1 bei 2,5 m als auch kleiner als auf der Rampe A befindliche Rauschzacken. Das Nutzecho N ist hier also nicht mit dem Hauptmaximum der Echofunktion identisch.

Nach dem Stand der Technik wird dieses Problem dadurch gelöst, daß die Echofunktion des leeren Behälters ("Leerechofunktion") aufgenommen, abgespeichert und zur weiteren Auswertung im Meßbetrieb herangezogen wird. Durch Vergleich der aktuellen Echofunktion mit der abgespeicherten Leerechofunktion kann nämlich entschieden werden, welche Peaks als Störechos ignoriert werden müssen.

Beispielsweise kann, wie in Fig. 4 dargestellt ist, eine Grenzkurve G definiert werden, indem auf die Leerechofunktion eine Konstante aufaddiert wird. Die aktuelle Echofunktion E unterscheidet sich von der Leerechofunktion im vorderen Bereich nicht. Von der aktuellen Echofunktion werden nur die Peaks ausgewertet, die über der Grenzkurve G liegen. In dem dargestellten Beispiel trifft dies nur auf den Nutzpeak N bei 7 m zu.

Diese Methode nach dem Stand der Technik versagt aber unter Praxisbedingungen

- wenn sich das Leerecho im Laufe der Zeit verändert, etwa durch Ablagerungen von Füllgut an der Behälterwand oder am Sensor;
- wenn das Leerecho davon abhängt, ob das Behälterinnere feucht oder trocken ist, denn die Leerechofunktionen des trockenen und des nassen Behälters können sich gravierend unterscheiden;
- wenn Störechos von Einbauten bei Befüllen und Entleeren verschieden sind;
- wenn sich Mehrfachreflexionen ausbilden und sich je nach Füllstand und Behältergeometrie Fokussierungseffekte bemerkbar machen, denn in diesem Fall kann das Nutzecho klein gegen eine Mehrfachreflexion sein und daher nicht als solches erkannt werden;
- wenn zeitvariante, z.B. periodische, Störechos auftreten, wie etwa von Rührwerken;
- wenn das Nutzecho in einem Behälter mit gekrümmtem Behälterboden bei fast leerem Behälter verschwindet, weil kein Signal in Richtung zum Sensor reflektiert wird;
- wenn das Nutzsignal zu klein wird, z.B. wegen einer niedrigen Dielektrizitätskonstante des Füllguts oder weil es durch Schaum absorbiert wird;
- wenn sich der Rauschpegel ändert.

In all diesen Fällen kann es passieren, daß die auf Grund einer früheren Leerechofunktion bestimmte Grenzkurve nicht mehr sinnvoll ist, so daß entweder ein aktueller Störpeak die Grenzkurve durchstößt und als Nutzpeak angesehen wird, weil die Grenzkurve zu tief verläuft, oder der eigentliche Nutzpeak die Grenzkurve nicht mehr durchstößt, weil sie mittlerweile zu hoch liegt. In beiden Fällen hängt sich das Meßgerät an einem falschen Meßwert fest.

Darüber hinaus kann bei turbulenten Oberflächen, Rührwerken, starker Dämpfung der Wellen in der Gasphase, schlecht reflektierenden Füllgütern usw. das Nutzsignal so stark gedämpft werden, daß es zeitweise verschwindet und anschließend wegen seiner geringen Höhe nicht mehr mit Sicherheit identifiziert wird. Ein zufällig vorhandener Rauschpeak wird dann vom Meßgerät als Nutzpeak interpretiert.

Im Falle von zeitweise stark absorbierendem Schaum oder bei Signalverlust infolge eines gekrümmten Behälterbodens bei fast leerem Behälter ist beim Stand der Technik keinerlei Aussage über den Füllstand möglich.

Zur Behebung der vorstehend geschilderten Mängel sind an dem in Fig. 1 dargestellten Behälter 10 zusätzlich zu dem Füllstandsmeßgerät 20 vier Grenzwertgeber 32, 34, 36, 38 in verschiedenen Höhen angebracht. Ein Grenzwertgeber ist bekanntlich ein Gerät, das ein elektrisches Signal abgibt, das anzeigt, ob der Füllstand im Behälter eine vorbestimmte Höhe erreicht hat oder nicht. Es sind verschiedene Arten von Grenzwertgebern bekannt, beispielsweise kapazitive und resistive Grenzwertgeber, die auf elektrische Eigenschaften des Füllguts ansprechen, Grenzwertgeber mit schwingenden Elementen, wie Membranen oder Schwingstäben, deren Schwingungen durch das Füllgut gedämpft werden oder deren Eigenresonanzfrequenz durch das Füllgut verändert wird, usw. Üblicherweise werden Grenzwertgeber dazu verwendet, das Erreichen eines kritischen Füllstands im Behälter zu überwachen, beispielsweise eines maximalen Füllstands, der nicht überschritten werden darf, oder eines minimalen Füllstands, der nicht unterschritten werden darf. Die Wahl des jeweils verwendeten Grenzwertgebers hängt von den Eigenschaften des Füllguts und von den Anwendungsbedingungen ab. In jedem Fall gibt ein Grenzwertgeber ein elektrisches Signal ab, das einen ersten Signalwert hat, wenn der Füllstand unter der zu überwachenden Höhe liegt, und das einen davon verschiedenen zweiten Signalwert hat, wenn der Füllstand über der zu überwachenden Höhe liegt. Das Signal ändert seinen Signalwert genau dann, wenn bei Zuführung oder Entnahme von Füllgut der Füllstand durch die zu überwachende Höhe geht. Bei mehreren Arten von Grenzwertgebern hängt der Signalwert davon ab, ob der Grenzwertgeber mit dem Füllgut in Berührung steht oder nicht; bei solchen Grenzwertgebern entspricht die vorbestimmte Höhe des Füllstands, die der Grenzwertgeber überwacht, der Einbauhöhe des Grenzwertgebers.

Für die in Fig. 1 dargestellten Grenzwertgeber 32, 34, 36, 38 ist jede bekannte Art geeignet; natürlich wird auch hier die Art von Grenzwertgebern gewählt, die für das betreffende Füllgut 12 am besten geeignet ist. Zum besseren Verständnis wird nachfolgend angenommen, daß es sich um Grenzwertgeber handelt, bei denen der Signalwert des Ausgangssignals davon abhängt, ob der Grenzwertgeber mit dem Füllgut in Berührung steht oder nicht. So haben bei der dargestellten Höhe des Füllstands F die Ausgangssignale der beiden oberen Grenzwertgeber 32 und 34 den ersten Signalwert, weil diese Grenzwertgeber mit dem Füllgut 12 nicht in Berührung stehen, während die Ausgangssignale der beiden unteren Grenzwertgeber 36 und 38 den zweiten Signalwert haben, weil diese Grenzwertgeber mit dem Füllgut 12 in Berührung stehen. Jeder Grenzwertgeber ist über eine eigene Leitung 33, 35, 37 bzw. 39 mit der Meßschaltung 24 des Füllstandsmeßgeräts 20 verbunden, so daß diese Meßschaltung die Ausgangssignale der vier Grenzwertgeber empfängt und in der nachfolgend beschriebenen Weise zur Störunterdrückung, Plausibilitätskontrolle und Selbstkorrektur bei der vom Füllstandsmeßgerät 20 durchgeführten kontinuierlichen Füllstandsmessung auswerten kann.

Zunächst kann die Meßschaltung 24 jederzeit eine Plausibilitätskontrolle für den vom Füllstandsmeßgerät 20 gelieferten Füllstands-Meßwert an Hand der momentanen Ausgangssignale der Meßwertgeber 32 bis 38 durchführen. Bei dem in Fig. 1 gezeigten Zustand liegt beispielsweise der Füllstand F zwischen der vom Grenzwertgeber 34 zu überwachenden Höhe und der vom Grenzwertgeber 36 zu überwachenden Höhe. Die Meßschaltung 24 erkennt diesen Zustand daraus, daß das Ausgangssignal des Grenzwertgebers 34 den ersten Signalwert und das Ausgangssignal des Grenzwertgebers 36 den zweiten Signalwert hat. Der vom Füllstandsmeßgerät 20 gelieferte Meßwert muß also zwischen diesen beiden Höhen liegen; ist dies nicht der Fall, so erkennt die Meßschaltung 24, daß ein Meßfehler vorliegt.

In der Meßschaltung 24 können ferner die stets vorhandenen Ausgangssignale der Grenzwertgeber 32 bis 38 bei der Auswertung der vom Füllstandsmeßgerät gelieferten Empfangssignale herangezogen werden, um insbesondere unter schwierigen Meßbedingungen diese Auswertung zu erleichtern und die Fehlersicherheit zu erhöhen. Da aus den Ausgangssignalen der Grenzwertgeber 34 und 36 bekannt ist, daß der Füllstand zwischen den diesen Grenzwertgebern zugeordneten Höhen liegt, kann die Auswertung auf den aus diesem Bereich stammenden Teil der Echofunktion beschränkt werden. Dadurch würden bei diesem Füllstand beispielsweise in der Echofunktion von Fig. 3 die Rauschzacken der Rampe A und die Störpeaks S1 und S2 von vornherein von der Auswertung ausgeschlossen, wodurch jede Gefahr vermieden würde, daß einer dieser Rauschzacken oder Störpeaks irrtümlich als Nutzpeak interpretiert wird.

Abgesehen von diesen auch im stationären Zustand stets vorhandenen Informationen liefern aber die Grenzwertgeber 32 bis 38 noch wesentlich genauere Füllstandsinformationen immer dann, wenn bei Änderungen des Füllstands dessen Höhe gerade durch die von einem Grenzwertgeber zu überwachende Höhe geht, so daß der betreffende Grenzwertgeber "schaltet" und sein Ausgangssignal seinen Signalwert ändert. Dadurch erhält die Meßschaltung 24 eine exakte Information über den momentanen Füllstand: der Meßwert entspricht der von dem schaltenden Grenzwertgeber überwachten Höhe. Durch Vergleich dieses Meßwerts mit dem im gleichen Augenblick vom Füllstandsmeßgerät 20 gelieferten Meßwert kann kontrolliert werden, ob das Füllstandsmeßgerät 20 richtig arbeitet. Wenn die Differenz zwischen den beiden Meßwerten eine vorgegebene Toleranzschwelle überschreitet, kann das Füllstandsmeßgerät 20 automatisch die folgende Maßnahme zur Verbesserung seiner Funktion treffen:

Die Leerechofunktion des Behälters wird von oben bis zur Höhe des schaltenden Grenzwertgebers aktualisiert, und es wird eine entsprechende neue Grenzkurve erstellt. Dadurch werden veränderte Störsignale kompensiert. Die Entscheidung, welcher der Peaks der Echofunktion das Nutzeche darstellt, wird da durch wieder eindeutig und richtig. Eine zufällige oder periodische Aktualisierung der Leerechofunktion bis zu dem von dem Füllstandsmeßgerät 20 allein ohne Zuhilfenahme eines Grenzwertgebers ermittelten Füllstand wäre nicht zielführend, da dieser Füllstand ja falsch sein kann, beispielsweise dann, wenn sich durch Ansatzbildung ein großer Störpeak gebildet hat, der fälschlicherweise als Nutzpeak ausgewertet wird. Durch die Aktualisierung der Leerechofunktion bis zu der von einem schaltenden Grenzwertgeber angezeigten Höhe wird gerade ein solcher Störpeak unterdrückt.

Die Aktualisierung der Leerechofunktion kann am einfachsten dadurch erfolgen, daß der zu aktualisierende Teil durch den entsprechenden Teil der zu Meßzwecken aufgenommenen aktuellen Echofunktion ersetzt wird, denn die aktuelle Echofunktion stimmt in dem oberhalb der Füllgutoberfläche liegenden Teil mit der Leerechofunktion überein. Eine Neuaufnahme bei teilweise gefülltem Behälter würde nichts anderes ergeben als die aktuelle Echofunktion.

Wenn trotz der Aktualisierung der Leerechofunktion keine ausreichende Übereinstimmung des vom Füllstandsmeßgerät 20 gelieferten Meßwerts mit dem vom schaltenden Grenzwertgeber angezeigten Füllstand zustande kommt, kann von der Meßschaltung 24 eine Warnung oder Störungsmeldung zur Auswertestelle geliefert werden.

Je nach der Anwendung der Füllstandsmeßanordnung kann auch grundsätzlich bei jedem Schalten eines Grenzwertgebers automatisch die Leerechofunktion oberhalb des dadurch angezeigten Füllstands aktualisiert werden, selbst wenn kein Meßfehler festgestellt wird, oder es kann in bestimmten Zeitintervallen der Teil der Leerechofunktion aktualisiert werden, der im Bereich der Grenzwertgeber liegt, die den Zustand "nicht bedeckt" melden.

Wenn die Meßschaltung 24 der gängigen Praxis entsprechend durch einen geeignet programmierten Mikrocomputer gebildet ist, kann sie die vorstehend geschilderten Funktionen ohne wesentliche Abänderung der Hardware durch entsprechende Programmänderungen ausführen. Es sind lediglich geeignete Schnittstellen für die Zuführung der Ausgangssignale der Grenzwertgeber erforderlich. Diese Schnittstellen sind für den Fachmann problemlos realisierbar, da diese Ausgangssignale ohnehin binäre Signale sind, die nur den einen oder den anderen von zwei Signalwerten annehmen. Da solche Schaltungen und deren Programmierung dem Fachmann allgemein bekannt sind, ist eine ins Einzelne gehende Darstellung und Beschreibung nicht erforderlich.

Die Anzahl der Grenzwertgeber, die an dem Behälter anzubringen sind, damit die Kontrolle des kontinuierlich messenden Füllstandsmeßgeräts in ausreichend kurzen Zeitabständen durchgeführt werden kann, hängt von den herrschenden Betriebsbedingungen ab. Wenn der Behälter in sich häufig wiederholenden Betriebszyklen im wesentlichen vollständig gefüllt und wieder entleert wird, wie dies beispielsweise in der chemischen Industrie und in der Lebensmittelindustrie meist der Fall ist, kann bereits ein einziger Grenzwertgeber zur Durchführung aller zuvor geschilderten Funktionen genügen. In diesem Fall ist es wichtig, daß der Grenzwertgeber eine Höhe des Füllstands überwacht, die beim Füllen und Entleeren des Behälters regelmäßig über- bzw. unterschritten wird.

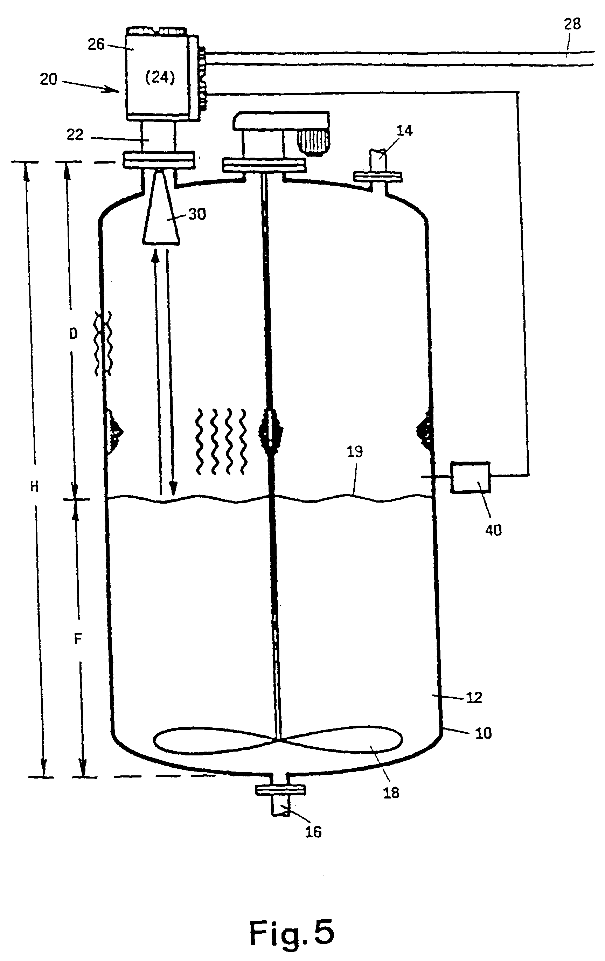

Als Beispiel zeigt Fig. 5 eine abgeänderte Ausführungsform der Füllstandsmeßanordnung von Fig. 1, bei der nur ein einziger Grenzwertgeber 40 etwa auf halber Höhe des Behälters 10, also in der Mitte zwischen dem minimalen und dem maximalen Füllstand angeordnet ist. Die Meßschaltung 24 empfängt in diesem Fall das Ausgangssignal des einzigen Grenzwertgebers 40 für die Kontrolle der vom Füllstandsmeßgerät 20 durchgeführten kontinuierlichen Füllstandsmessung. Auch in diesem Fall ist eine ständige Plausibilitätskontrolle möglich: Wenn der Grenzwertgeber 40 anzeigt, daß der Füllstand über oder unter der von ihm zu überwachenden Höhe liegt, muß auch der vom Füllstandsmeßgerät 20 gelieferte Füllstands-Meßwert in dem betreffenden Bereich liegen. Ferner liefert der Grenzwertgeber in jedem Betriebszyklus zweimal einen genauen Füllstands-Meßwert, wenn der Füllstand beim Füllen und beim Entleeren des Behälters durch die überwachte Höhe geht. Durch Vergleich dieses Meßwerts mit dem im gleichen Zeitpunkt vom Füllstandsmeßgerät 20 gelieferten Meßwert kann in gleicher Weise wie bei der Ausführungsform von Fig. 1 kontrolliert werden, ob das Füllstandsmeßgerät 20 richtig arbeitet, und es können die zuvor geschilderten Maßnahmen zur Behebung von Meßfehlern oder zur Anzeige einer Störung durchgeführt werden.

**Patentansprüche**

1. Füllstandsmeßgerät (20) zur kontinuierlichen Messung des Füllstands (F) eines Füllguts (12) in einem Behälter (10), das einen Füllstandssensor (22) aufweist, der von einer oberhalb des höchsten vorkommenden Füllstands liegenden Stelle aus Wellen auf die Oberfläche (19) des Füllguts (12) richtet, der die an der Füllgutoberfläche (19) reflektierten Echowellen empfängt und der ein die Echowellen darstellendes elektrisches Ausgangssignal liefert, und das eine Meßschaltung (24) aufweist, die aus dem Ausgangssignal des Füllstandssensors (22) das an der Füllgutoberfläche (19) reflektierte Nutzecho ermittelt und den Meßwert des Füllstands aus der Laufzeit des Nutzechos bestimmt, wobei die Meßschaltung (24) über eine Zweidrahtleitung (28) mit einer entfernten Auswertestelle verbunden ist, wobei die Meßschaltung (24) über die Zweidrahtleitung (28) das den Füllstand anzeigende elektrische Meßsignal liefert und wobei die Versorgung des Füllstandsmeßgeräts (20) mit elektrischer Energie über die gleiche Zweidrahtleitung (28) von der Auswertestelle her erfolgt.

2. Füllstandsmeßgerät nach Anspruch 1, wobei es sich bei dem elektrischen Meßsignal um ein zwischen 4 und 20mA veränderliches Stromsignal handelt.

3. Füllstandsmeßgerät nach Anspruch 1 oder 2, wobei es sich bei den Wellen um kurze elektromagnetische Wellen (Mikrowellen) oder um Ultraschallwellen handelt.

4. Füllstandsmeßgerät nach Anspruch 1, 2 oder 3, wobei an dem Behälter (10) wenigstens ein Grenzwertgeber (32, 34, 36, 38; 40) angeordnet ist, der ein elektrisches Signal liefert, das anzeigt, ob der Füllstand (F) im Behälter (10) über oder unter einer von dem Grenzwertgeber zu überwachenden Höhe liegt, die einem Füllstand entspricht, der zwischen dem minimalen und dem maximalen Füllstand des Behälters (10) liegt, wobei die Meßschaltung (24) das Ausgangssignal des bzw. jedes Grenzwertgebers (32, 34, 36, 38; 40) empfängt und zur Kontrolle des vom Füllstandsmeßgerät (20) ermittelten Füllstands-Meßwerts verwendet.

5. Füllstandsmeßgerät nach Anspruch 4, wobei am Behälter (10) mehrere Grenzwertgeber (32, 34, 36, 38) zur Überwachung unterschiedlicher Höhen des Füllstands (F) angeordnet sind und wobei die Meßschaltung (24) bei jeder Zustandsänderung des Ausgangssignals eines Grenzwertgebers (32, 34, 36, 38), die auftritt, wenn der Füllstand (F) die von diesem Grenzwertgeber zu überwachende Höhe erreicht, den gleichzeitig vom Füllstandsmeßgerät (20) gelieferten Füllstands-Meßwert mit dieser Höhe vergleicht, um die Richtigkeit der vom Füllstandsmeßgerät (20) durchgeführten Messung zu kontrollieren.

6. Füllstandsmeßgerät nach Anspruch 5,
wobei die Meßschaltung (24) aus dem Ausgangssignal des Füllstandssensors (22) eine Echofunktion (E) bildet, die die Echoamplituden als Funktion der Entfernung über den gesamten Meßbereich darstellt, und
wobei jede aktuelle Echofunktion mit einer bei leerem Behälter (10) aufgenommenen, gespeicherten Leerechofunktion vergleicht, um das Nutzecho (N) zu ermitteln, das den an der Füllgutoberfläche (19) reflektierten Echowellen entspricht.

7. Füllstandsmeßgerät nach Anspruch 6,
wobei die Meßschaltung (24) jedesmal dann, wenn der Höhenvergleich einen über einer vorgegebenen Fehlergrenze liegenden Meßfehler ergibt, die Leerechofunktion von oben bis zu der Höhe aktualisiert, die von dem Grenzwertgeber (32, 34, 36, 38) zu überwachen ist, dessen Ausgangssignal seinen Zustand geändert hat.

8. Füllstandsmeßgerät nach Anspruch 6,
wobei die Meßschaltung (24) die gespeicherte Leerechofunktion unabhängig von dem Ergebnis des Höhenvergleichs jedesmal dann, wenn das Ausgangssignal eines Grenzwertgebers (32, 34, 36, 38) seinen Zustand ändert, von oben bis zu der von diesem Grenzwertgeber zu überwachenden Höhe aktualisiert.

9. Füllstandsmeßgerät nach Anspruch 6,
wobei die Meßschaltung (24) die gespeicherte Leerechofunktion in vorbestimmten Zeitintervallen im Bereich der Grenzwertgeber (32, 34, 36, 38), deren Ausgangssignale anzeigen, daß der Füllstand (F) unter den von ihnen zu überwachenden Höhen liegt, aktualisiert.

10. Füllstandsmeßgerät nach Anspruch 6 bis 9, wobei die Meßschaltung (24) zur Ermittlung des Nutzechos (N) nur den Teil der aktuellen Echofunktion auswertet, der in dem Bereich zwischen den von zwei Grenzwertgebern (32, 34, 36, 38) zu überwachenden Höhen liegt, von denen der eine Grenzwertgeber anzeigt, daß der Füllstand über der von ihm zu überwachenden Höhe liegt, und der andere Grenzwertgeber anzeigt, daß der Füllstand unter der von ihm zu überwachenden Höhe liegt.

11. Füllstandsmeßgerät nach Anspruch 5 bis 10,
wobei die Meßschaltung (24) prüft, ob der vom Füllstandsmeßgerät (20) gelieferte Füllstands-Meßwert in dem Bereich zwischen den von zwei Grenzwertgebern (32, 34, 36, 38) zu überwachenden Höhen liegt, von denen der eine Grenzwertgeber ein Signal abgibt, das anzeigt, daß der Füllstand über der von ihm zu überwachenden Höhe liegt, und der andere Grenzwertgeber ein Signal abgibt, das anzeigt, daß der Füllstand unter der von ihm zu überwachenden Höhe liegt.

12. Füllstandsmeßgerät nach Anspruch 4, wobei am Behälter (10) ein Grenzwertgeber (40) angeordnet ist und die Meßschaltung (24) bei jeder Zustandsänderung des Ausgangssignals des Grenzwertgebers (40), die auftritt, wenn der Füllstand die von dem Grenzwertgeber (40) zu überwachende Höhe erreicht, den gleichzeitig vom Füllstandsmeßgerät (20) gelieferten Füllstands-Meßwert mit dieser Höhe vergleicht, um die Richtigkeit der vom Füllstandsmeßgerät (20) durchgeführten Messung zu kontrollieren.

13. Füllstandsmeßgerät nach Anspruch 12,
wobei die Meßschaltung (24) aus dem Ausgangssignal des Füllstandssensors (22) eine Echofunktion (E) bildet, die die Echoamplituden als Funktion der Entfernung über den gesamten Meßbereich darstellt, und jede aktuelle Echofunktion mit einer bei leerem Behälter (10) aufgenommenen, gespeicherten Leerechofunktion vergleicht, um das Nutzecho (N) zu ermitteln, das den an der Füllgutoberfläche (19) reflektierten Echowellen entspricht.

14. Füllstandsmeßgerät nach Anspruch 13,
wobei die Meßschaltung (24) jedesmal dann, wenn der Höhenvergleich einen über einer vorgegebenen Fehlergrenze liegenden Meßfehler ergibt, die Leerechofunktion von oben bis zu der Höhe aktualisiert, die von dem Grenzwertgeber (40) zu überwachen ist.

15. Füllstandsmeßgerät nach Anspruch 13,
wobei die Meßschaltung (24) die gespeicherte Leerechofunktion unabhängig von dem Ergebnis des Höhenvergleichs jedesmal dann, wenn das Ausgangssignal des Grenzwertgebers (40) seinen Zustand ändert, von oben bis zu der von dem Grenzwertgeber (40) zu überwachenden Höhe aktualisiert.

Fig.1

Fig. 2

Fig.3

Fig.4

# Fig. 5

Europäisches
Patentamt

**EUROPÄISCHER RECHERCHENBERICHT**

Nummer der Anmeldung

EP 99 11 7849

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 400 976 A (BLADES FREDERICK K)<br>30. August 1983 (1983-08-30)<br>* Zusammenfassung *<br>* Spalte 3, Zeile 34 - Zeile 68; Abbildung 1 * | 1,3 | G01F23/296<br>G01F23/284<br>G01F25/00 |
| X | US 5 207 101 A (HAYNES KEVIN M)<br>4. Mai 1993 (1993-05-04)<br>* Spalte 2, Zeile 16 - Zeile 43 * | 1-3 | |
| Y | * Spalte 4, Zeile 6 - Zeile 50; Abbildung 1 *<br>* Anspruch 16 * | 4 | |
| Y | DE 38 35 406 A (DANFOSS AS)<br>19. April 1990 (1990-04-19)<br>* Zusammenfassung *<br>* Spalte 5, Zeile 64 - Spalte 6, Zeile 6; Abbildung * | 4 | |
| A | DANIEWICZ J L: "USING RADAR LEVEL MEASUREMENT FOR INCREASED ENVIRONMENTAL PROTECTION AND PLANT SAFETY"<br>ADVANCES IN INSTRUMENTATION AND CONTROL,<br>Bd. 46, Nr. PART 02,<br>1. Januar 1991 (1991-01-01), Seiten 1201-1212, XP000347560<br>RESEARCH TRIANGLE PARK,NC,US<br>* Seite 1207, Absatz 3 - Seite 1208, Absatz 1; Abbildung 12 * | 4 | **RECHERCHIERTE SACHGEBIETE (Int.Cl.6)**<br><br>G01F |
| A | DE 31 07 091 A (IHC HOLLAND NV)<br>7. Januar 1982 (1982-01-07)<br>* Seite 11, Absatz 2 - Seite 12, Absatz 3 *<br>* Seite 16, Absatz 2 - Seite 17, Absatz 3 *<br>* Seite 23, Zeile 7 - Zeile 9; Abbildungen * | 4 | |

-/--

Der vorliegende Recherchenbericht wurde für alle Patentansprüche erstellt

| Recherchenort | Abschlußdatum der Recherche | Prüfer |
|---|---|---|
| DEN HAAG | 11. Oktober 1999 | Pflugfelder, G |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
   Dokument

EPO FORM 1503 03.82 (P04C03)

EP 0 961 106 A1

Europäisches Patentamt

**EUROPÄISCHER RECHERCHENBERICHT**

Nummer der Anmeldung

EP 99 11 7849

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DUNCAN D L: "ULTRASONICS IN SOLIDS LEVEL MEASUREMENT" ADVANCES IN INSTRUMENTATION AND CONTROL, Bd. 46, Nr. PART 02, 1. Januar 1991 (1991-01-01), Seiten 1355-1366, XP000347570 RESEARCH TRIANGLE PARK, NC,US * Seite 1358, Absatz 3 – Absatz 5; Abbildung 6 * ----- | 4 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 11. Oktober 1999 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

16

**ANHANG ZUM EUROPÄISCHEN RECHERCHENBERICHT**
**ÜBER DIE EUROPÄISCHE PATENTANMELDUNG NR.**                    EP 99 11 7849

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-1999

| Im Recherchenbericht angeführtes Patentdokument | | Datum der Veröffentlichung | Mitglied(er) der Patentfamilie | | Datum der Veröffentlichung |
|---|---|---|---|---|---|
| US 4400976 | A | 30-08-1983 | US | 4523472 A | 18-06-1985 |
| US 5207101 | A | 04-05-1993 | KEINE | | |
| DE 3835406 | A | 19-04-1990 | DK | 514289 A | 19-04-1990 |
| | | | GB | 2225113 A,B | 23-05-1990 |
| | | | JP | 1945982 C | 23-06-1995 |
| | | | JP | 2159522 A | 19-06-1990 |
| | | | JP | 6074995 B | 21-09-1994 |
| DE 3107091 | A | 07-01-1982 | NL | 8001034 A | 16-09-1981 |
| | | | JP | 56154386 A | 28-11-1981 |
| | | | US | 4365509 A | 28-12-1982 |

EPO FORM P0461

Für nähere Einzelheiten zu diesem Anhang : siehe Amtsblatt des Europäischen Patentamts, Nr.12/82